Europäisches Patentamt

European Patent Office

Office européen des brevets

(11) Publication number: 0 393 960
A1

## (12) EUROPEAN PATENT APPLICATION

(21) Application number: 90304049.1

(22) Date of filing: 12.04.90

(51) Int. Cl.5: B64D 15/20, G01H 15/00

(30) Priority: 20.04.89 US 340996

(43) Date of publication of application:
24.10.90 Bulletin 90/43

(84) Designated Contracting States:
DE FR GB IT NL SE

(71) Applicant: SIMMONDS PRECISION PRODUCTS
INC.
1313 N Market Street Hercules Plaza
Wilmington Delaware 19894(US)

(72) Inventor: Andresen, Richard P.
9 Bayfield Drive
Shelburne, Vermont 05482(US)
Inventor: Lichtenfels, Frederick L.
Rd No. 2, Box 356-42
Vergennes Vermont 05491(US)

(74) Representative: Foster, David Martyn et al
MATHISEN MACARA & CO. The Coach
House 6-8 Swakeleys Road
Ickenham Uxbridge UB10 8BZ(GB)

(54) Ice detecting apparatus and methods.

(57) For detecting the presence of ice on an exposed surface 18 such as an air foil surface of an aircraft, a sensor 10 has a hollow body portion including a piezoelectric transducer which is energised to generate ultrasonic pulses which are directed internally of the sensor to an end surface thereof which is co-planar with the surface 18. The pulses are reflected back to the transducer. In addition, the pulses are reflected back to the transducer by a shoulder in the sensor body and acting as a reference surface. The resultant signals produced by the transducer from the reflected pulses are processed so as to compare the amplitude of each pulse reflected by the end with the amplitude of each pulse reflected by the reference surface to produce an output indicating the presence and the thickness of ice on the air foil 18.

Fig.1.

EP 0 393 960 A1

**Ice Amplitude**

## BACKGROUND OF THE INVENTION

The invention relates to apparatus and methods for detecting the presence and/or thickness of ice. Apparatus and methods according to the invention, and to be described below, detect the amplitude of ultrasonic pulses reflected from a surface including the wings and other aerodynamically active surfaces of aircraft and the like.

Whitener, in U.S. Patent 4,679,160, discloses ultrasonic depth measurement apparatus and methods, in which ice thickness is detected from the difference in time between the return of the pulses reflected from the sensor surface and the air-ice interface. The Whitener apparatus and methods do not differentiate between water, slush (mixtures of water and ice) and ice.

Birchak, et al, in U.S. Patent 4,571,693, discloses an acoustic device for measuring fluid properties. Fluid characteristics are determined within a gap between reflecting surfaces.

## BRIEF SUMMARY OF THE INVENTION

According to the invention, there is provided apparatus for detecting ice, comprising a sensing surface, a device for transmitting ultrasonic pulses to the sensing surface, and a device for detecting ultrasonic pulses reflected from the sensing surface, and characterised by ice presence detecting device for detecting ice on the sensing surface or immediately adjacent thereto in dependence on the amplitude of the reflected pulse.

According to the invention, there is also provided a method of detecting ice, comprising the steps of transmitting successive ultrasonic pulses to a sensing surface on which or immediately adjacent to which ice may form, and detecting the resultant ultrasonic pulses reflected from the sensing surface, and characterised by the step of sensing the amplitude of the reflected pulses whereby to determine the presence of ice on the sensing surface or on the surface immediately adjacent thereto.

## DESCRIPTION OF THE DRAWINGS

Ice presence indicating apparatus and methods according to the invention will now be described, by way of example only, with reference to the accompanying drawings, in which:

Figure 1 is a cross-sectional view of one form of the apparatus;

Figure 2 is a cross-sectional view of a sensor in the apparatus of Figure 1;

Figure 3 is a schematic representation of an acoustic transmission line portion the sensor of Figure 2;

Figure 4 is an idealised graphical representation of return signal pulses representative of energy returned from a reference reflector surface and a sensing surface in the apparatus of Figure 1;

Figure 5 is a functional block diagram of a control circuit for operating the apparatus of Figure 1;

Figure 6 is a functional block diagram of another control circuit for operating apparatus of the form of that shown in Figure 1 but having a plurality of sensors;

Figure 7 is an exemplary representation of three acoustic transmission line portions of sensors of the type shown in Figure 2 but of different lengths and having differently shaped sensing surfaces.

Figure 8 is a cross-sectional view corresponding to Figure 1 but also showing a resistance de-icer;

Figure 9 is a cross-sectional view corresponding to Figure 1 but also showing an ice detector installed adjacent to a hot air de-icing duct;

Figure 10 is a cross-sectional view corresponding to Figure 1 but showing the sensor installed beneath a wear strip;

Figure 11 is a schematic circuit diagram of one form of the apparatus;

Figure 12 is a bottom view of a housing body for a sensor of the form shown in Figure 2; and

Figure 13 is a side view of the housing body of Figure 12.

## DESCRIPTION OF PREFERRED EMBODIMENTS

More specifically to be described below is a method of detecting the presence of ice on the surface of an aircraft. The aircraft supports an acoustic energy source and an acoustic energy detector. The source is adapted to transmit acoustic energy to an internal surface of a member of the aircraft, such as an airfoil.

The detector is adapted to detect reflected acoustic energy from a surface. The presence of ice on the external surface of the aircraft member is detected by monitoring acoustic energy reflected from the surface.

Preferably, the presence and thickness of ice on the external airfoil surface is detected by determining the reflection coefficient of the acoustic energy reflected from the internal surface adjacent thereto. Preferably, the exterior airfoil surface is then de-iced by heating.

Another method to be described determines the thickness of ice. A source of ultrasonic pulses transmits at least one ultrasonic pulse from the source to a sensor surface. The amplitude of the pulse reflected from the sensor surface is detected, and the thickness of ice on the sensor surface is determined from the amplitude of the reflected pulse. This method is adapted for use in aircraft. The sensor surface is positioned to detect the thickness of ice on the exterior surface of an aircraft body member, such as an airfoil. Instead, the presence and thickness of ice on an aircraft airfoil surface can be detected by detecting acoustic energy reflected from the interior surface of the airfoil adjacent to the position thereon where ice presence is being detected.

Preferably, a de-icer is provided which is adapted to de-ice the body member upon detection of a threshold thickness of ice on the exterior surface. The threshold thickness is readily adjustable. A first preset pulse amplitude value is provided for comparison to the pulse reflected from the sensor surface. A second preset value is provided for comparison with a value corresponding to the pulse amplitude of the pulse reflected from the sensor surface. The time between the first and second preset values is monitored to provide a rate of ice thickness accumulation. Preferably, the sensor surface is connected to a plate which is adapted to be connected to the exterior surface by at least one readily removable connector. A reference surface is preferably provided for reflecting an ultrasonic pulse from the reference surface. The amplitude of the pulse reflected from the reference surface is detected and compared with the amplitude of the pulse from the sensor surfaces.

More generally, a method of detecting the presence of ice will be described. An ultrasonic pulse source transmits at least one ultrasonic pulse to a sensor surface. The presence of ice on the sensor surface is determined from the amplitude of the pulse reflected from the sensor surface. The amplitude of the pulse reflected from the sensor surface is compared with a readily adjustable threshold amplitude. A sensor surface is positioned to detect the thickness of ice on an exterior aircraft surface, such as an airfoil or other body member such as an airframe or engine inlet surface. A de-icer is provided which is adapted to de-ice the aircraft body member upon detection of a threshold thickness of ice on the exterior aircraft surface. Preferably the sensing surface is flush-mounted.

The sensor may be a solid-state device capable of achieving a high degree of reliability in severe aircraft environments. It may include a ceramic delay line, a piezoelectric ceramic crystal, a one-piece nonmagnetic housing, a de-icing heater, and a connector or pigtail.

The sensor can be mounted on an airframe or engine inlet with the sensor face flush with the exterior surface. This provides ice detection directly on the surface of interest. The small size of the sensor allows it to be located in areas previously inaccessible to ice detection.

The apparatus may use a signal conditioner in the form of an environmentally sealed electronics unit designed for use in severe environments. The signal conditioner's built-in test monitors the operation of the internal circuitry and can detect a failure in the sensor or in the interconnecting cable. The signal conditioner uses a ratiometric measurement technique, which makes it insensitive to minor sensor changes due to thermal effects, manufacturing tolerances, and process variations. Preferably the system includes circuit redundancy and accommodation of multiple sensors.

In a preferred embodiment, the piezoelectric ceramic crystal (PCC) acts as a transmitter and launches an ultrasonic pulse through a delay line to the surface being monitored. After initial excitation, the PCC acts as a receiver and detects an echo returning from the surface. The delay line guarantees that the PCC has recovered from the initial excitation before it receives the returning echo. When an air interface is present at the surface being measured (no ice), a maximum amount of energy is reflected. When ice is present, about 30 per cent of the transmitted ultrasonic energy propagates into the ice, thus reducing the level of the reflected signal the PCC receives. This level reduction provides an accurate indication of the presence of thin ice layers. Once the ice has exceeded the threshold thickness, the sensor continues to detect the presence of ice regardless of the accretion of additional ice. With the presence of ice reliably detected, the signal conditioner displays icing conditions and/or provides monitor and control functions for related anti-icing and de-icing equipment. The sensor system detects the presence of ice and its absence after melting or shedding has occurred. The sensor also exhibits immunity to water, cleaning solvents, and liquid de-icing agents.

In a preferred embodiment, the accuracy of the ice detection system is 0.254 ± 0.127 millimetres (0.010 inch ± 0.005 inch) which is the ice detection minimum thickness (threshold) detectable for temperatures from -20° to 0° C and liquid water content levels between 0.2 to 2 gm/M³.

The apparatus to be described has an auto-calibrating feature which makes the ice sensing function independent of all system variables other than the presence or absence of ice on the sensing surface.

Thus the apparatus to be described provides an ultrasonic ice presence detector having an ultrasonic transducer which provides an interrogation pulse to an acoustic transmission medium having a surface that functions as an ice presence sensing surface. The interrogation pulse is reflected from the sensing surface as a function of the acoustic impedance at the sensing surface/air interface with the reflected energy representative of that acoustic impedance. A specific change in the acoustic impedance caused by the presence of ice on the sensing surface is detected to provide a 'ice present' signal indicative of a particular thickness.

In the apparatus to be described, a transmit/receive piezoelectric transducer is coupled to one end of a rod-like acoustic delay line with the other end of the rod co-aligned with the surface of an air foil. The transducer is excited by an electrical pulse to transmit an ultrasonic pulse along the rod to the sensing surface. A portion of the transmitted pulse is reflected at the sensing surface as a function of the acoustic impedance at the sensing surface/air interface. When ice accumulates on the sensing surface, the acoustic impedance at the interface changes causing a transition in the magnitude of the reflected energy. A known acoustic discontinuity is provided in the acoustic delay line represented by the rod so that the magnitude of a first reflected pulse of known characteristics is sensed by the transducer and compared with the magnitude of a second, following pulse representative of the ice thickness at the sensing surface. The provision of a known acoustic discontinuity allows the system to self-reference or self-calibrate during each cycle so that sensing is independent of scaling factors present in the electronics that drive the transducer and long-term changes in the response characteristics of the various components.

A plurality of transducers are provided at different sensing sites and operated in a successive serial manner through a multiplexer to provide a recurring series of information signals representative of the ice/no ice condition. Alternatively, the acoustic delay line associated with each transducer can be of a different length to provide a time delay unique to that sensor. The transducers are excited simultaneously with the return information signals for each transducer associated with a unique time delay from the moment of excitation.

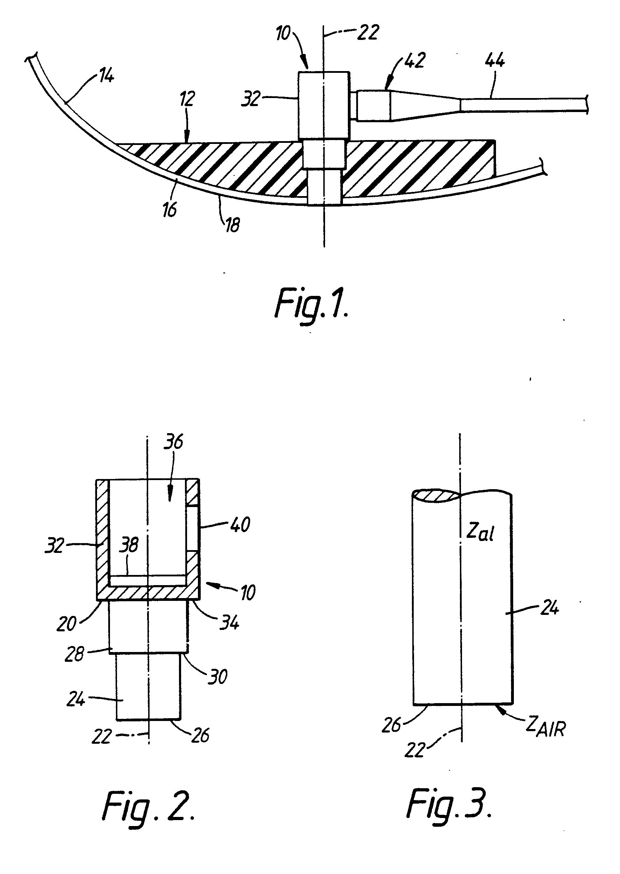

Referring in more detail to the drawings, an ice detection sensor system is shown in Figure 1 and, as shown, includes a sensor 10 mounted in a support block 11 which is positioned against the interior surface 14 of a wall section 16 which defines, in an aircraft environment, an exposed air foil surface 18, such as the surface of a wing or an air entry surface of an engine nacelle. The support block 12 can be formed from a moulded plastic, for example, with the sensor 10 and a sensor accepting bore provided with complementary threads (not shown). As shown in the cross-sectional view of Figure 2, the sensor 10 is defined as a body member 20 formed about a longitudinal axis 22 and can be fabricated from various materials including metals, ceramics, plastics, and metal-plated plastics. In general, the material should have good thermal, erosion, and ageing characteristics and an acoustic impedance that maximizes the signal change due to ice accretion while minimizing the changes due to containments. In one form of the sensor 10, the body member 20 is fabricated from machinable MACOR (a trade mark of Corning) ceramic. The body member 20 is formed with a stepped cylindrical portion which functions, as described below, as an acoustical transmission line with known propagation characteristics, and includes a distal section 24 having an end surface at its remote end which functions as a sensing surface 26, an intermediate section 28 which joins with the distal section 24 at an annular shoulder functioning as a reference surface 30, and a rear section 32 which joins with the intermediate section 28 at an annular shoulder 34. The rear section 32 is formed with a counterbore 36 with a discoidal piezoelectric transducer 38 secured to the bottom wall of the counterbore 36 with a suitable cement. As shown in Figure 1, the sensing surface 26 is positioned in a substantially co-planar relationship with the exposed surface 18 of the wall section 16. While the sensing surface 26 is shown as essentially planar, as explained below, the sensing surface 26 can be non-planar so as to conform to the shape of the immediately adjacent surface.

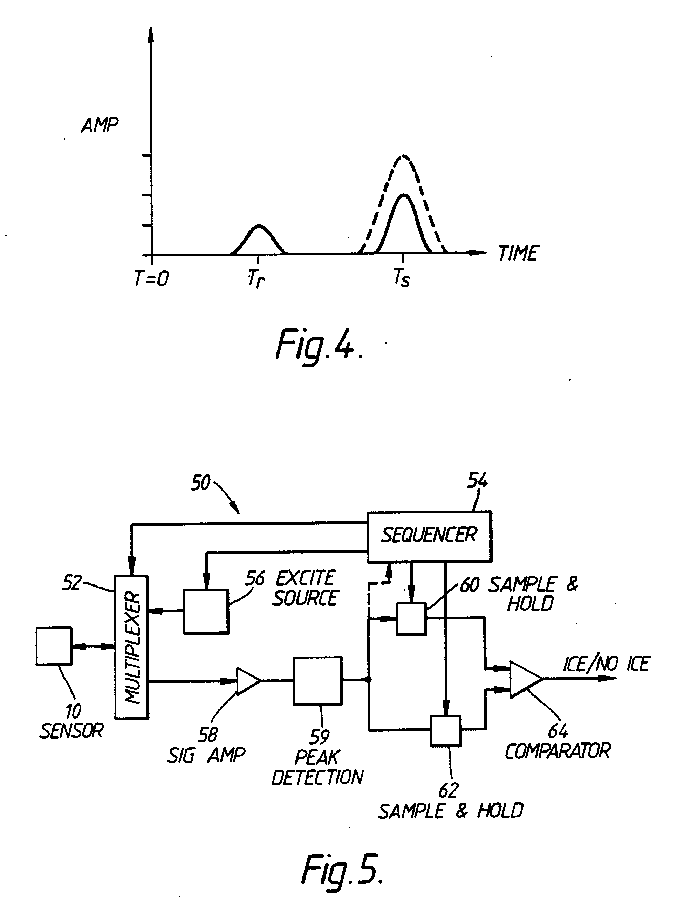

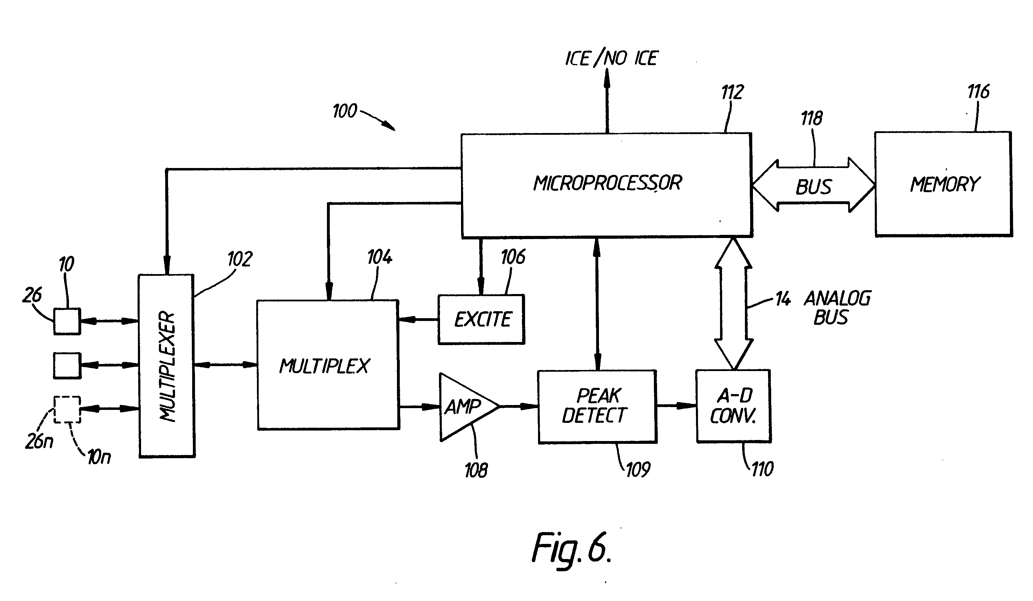

The piezoelectric transducer 38 is of conventional design and produces an acoustic output pulse in response to an electrical drive signal, and, conversely, produces an electrical output signal when acoustically stimulated. The piezoelectric transducer 38 includes electrodes (not shown) formed on its opposite faces for connection to appropriate conductors (not shown) which pass through an opening 40 to a connector 42 and a cable 44 (Figure 1). The piezoelectric transducer 38 is connected to and controlled by a controller circuit, described more fully below in connection with Figures 5 and 6. The counterbore 36 rearwardly of the piezoelectric transducer 38 is preferably backfilled with an appropriate 'potting' material, such as various types of epoxies and silicones.

The piezoelectric transducer 38 is operated by a drive signal, as explained more fully below, to produce an acoustic pulse at a selected frequency (e.g. 15 MHz) with the pulse coupled to and transmitted along the body member 20 towards and to the remote sensing surface 26. Depending upon the acoustic impedance present, the interface between the sensing surface 26 and the surrounding medium, e.g. air, a portion of the transmitted pulse will be reflected from the sensing surface 26 rearwardly to the piezoelectric transducer 38 which, in turn, will produce an electrical output representative of the reflected energy. As ice accumulates, the amplitude of the reflected echo diminishes from a normalized value of unity to a value determined by the specific acoustic impedance of the ice and that of the delay line material. Intermediate between these values is a transition region in which the amplitude follows, as can be appreciated by those skilled in the art, a generally non-linear relationship dependent upon the impedances of the delay line, the ice, and the air, as well as the impedance of the ice layer itself. Empirical studies indicate that the upper limit of the transition region is dependent upon the frequency of operation insofar as the steady state ice-present amplitude is reached after the ice has attained a thickness of approximately one acoustic wavelength. Since the wavelength in a given material is inversely proportional to the frequency, one can select the centre frequency of operation based upon an approximation of the desired threshold thickness. "Fine tuning" of the threshold of interest is made by selecting the correct point in the transition region at which the indication occurs. Thus, it can readily be seen that ice detection is based upon the dynamic characteristics of the reflected pulse amplitudes in the transition region between steady state reflection amplitudes. As represented in schematic fashion in Figure 3, an aluminium acoustic transmission line, as represented by the distal section 24, has an acoustic impedance $Z_{al}$ which is the product of the speed of sound in the material and the density of the material. Where the acoustic impedance of the materials at the interface between the sensing surface 26 and the surrounding environment is known, i.e., aluminium and air, the reflection coefficient R is the ratio of the reflected signal to the transducer-transmitted signal as follows:

$$R = (Z_{air} - Z_{al})/(Z_{air} + Z_{al}) \qquad (1)$$

where $Z_{al} = 17.1 \times 10^5$ gm/cm²sec and $Z_{air} = 41.6$ gm/cm²sec. Since $Z_{al}$ is very much greater than $Z_{air}$, $R = Z_{al}/Z_{al} = -1$

For air at the sensing surface 26, the reflection coefficient R can be considered as unity in magnitude. When ice in excess of one acoustic wavelength is present on the sensing surface 26, a steady state reflection coefficient of about 0.7 is observed. For thin ice thicknesses, of the order of a wavelength, the reflection coefficient R also depends on the ice thickness-to-wavelength ratio. In the vicinity of a quarter wavelength of ice, the reflection coefficient R typically exhibits a strong minimum substantially less than the steady state value of thick ice. As the ice increases in thickness beyond a half wavelength, R goes through a maximum value slightly greater than the steady state value. Subsequent ice growth causes the reflection coefficient to decrease monotonically to the steady state value at or near an acoustic wavelength in thickness. At greater thicknesses, no significant additional changes in the reflection amplitude are observed. Utilizing a simple level sensitive detection threshold, one can select arbitrary threshold thicknesses for values up to a quarter wavelength. If edge sensitive thresholds are utilized, the range can be extended up to a half wavelength. In either case, after ice detection occurs, the detector provides a positive indication of the continued presence of ice. In one embodiment, a 15 MHz interrogation frequency (having a wavelength in ice of 0.254 millimetres (0.010 inches) provides good sensitivity for ice thicknesses of up to 0.127 millimetres (0.005 inches).

One advantage of the system described is the inherent insensitivity of the system to liquid water and its ability to distinguish between liquid water and ice because of the substantial difference in impedance Z between water and ice. Water has an impedance $Z_{water}$ of $1.48 \times 10^5$ gm/cm²sec, about one-half that of ice, to produce a steady-state reflection coefficient R of 0.84 at an aluminium/water interface as contrasted to a value R of 0.7 for an aluminium /ice interface. In order to ensure such insensitivity to water, the correct choice of delay line material is important. If only steady state reflection values are considered, the optimal impedance of the delay line would be equal to that of the ice to be detected. However, such a choice changes the nature of the transition region. Under such conditions, a complete transfer of power into the ice takes place and the measurement echo is lost, since the echo "moves" with the ice growth. The delay line material of the system being described maintains sufficient impedance mismatch with the ice so as to cause only a delay line end-face echo (e.g. a measurement echo) to be observed.

In order to prevent errors in the determination of the reflection coefficient R consequent to normal variations in input/output characteristics of the below-described electronic controllers of Figures 5 and 6, and variations in the transducer performance with temperature and age, etc., the system uses the reference surface 30 in the form of the annular shoulder between the distal section 24 and the intermediate section 28. The reference surface 30 serves as a reflector to return a portion of the interrogation energy transmitted by the piezoelectric transducer 38. Since the interface at the reference surface 30 is constant relative to changes in impedance at the sensing surface 26 interface, energy reflected from the reference surface 30 can be used, as described below, to normalize the energy returned from the sensing surface 26 and compensate for a number of possible error sources. The provision of the reference surface 30 allows for the quantitative evaluation of the energy returned from the sensing surface 26 in such a way as to compensate for the normal range of variation in the interrogation pulse transmitted by the piezoelectric transducer 38 including compensation for the variations in the input/output characteristics of the below-described electronic controller, variations in the transducer performance with temperature, age, etc. In general, the acoustic discontinuity presented by the reference surface 30 should provide a return signal of the same order of magnitude as the signal returned from the sensing surface 26. In the context of the embodiment presented in Figures 1 and 2, a reference surface 30 having a surface area approximately the same as that of the sensing surface 26 is suitable. The reference surface 30 need not be in the form of an annular surface area between cylindrical sections of different diameter as shown and can be formed, for example, by a peripheral slot formed in a plane transverse to the long axis to define an acoustic discontinuity sufficient to return energy to the transducer 38 to provide a usable reference signal. In addition, an interior cavity (not shown) can be used to provide the desired reflected energy. Alternately, a separate delay line attached to the backside of the crystal could be used.

In operation, the transducer 38 is excited with a drive pulse which ends at time $T = O$, and, as shown in the idealised graphical representation of Figure 4, a first return pulse is detected at time $T = T_r$ from the reference surface 30 and a second, following return pulse is detected at time $T = T_s$ from the sensing surface 26 of the sensor 10 with the time between pulses dependent upon the physical separation of the two surfaces. The amplitude of the reference pulse at time $T = T_r$ is a function, in part, of the acoustic impedance at the reference surface 30 and will remain relatively constant. The amplitude of the pulse at time $T = T_s$ returned from the sensing surface 26 is a function of the acoustic impedance at the sensing surface 26 and will be of a first, higher amplitude (dotted-line above $T_s$ in Figure 4) for an air interface and discernibly lower, second amplitude for the presence of ice at the interface. The solid-line in Figure 4 is representative of the presence of relatively thick ice. The thinner the layer of ice above the sensing surface 26, the closer the amplitude of the pulse returned therefrom is to the amplitude of the pulse returned when no ice is present thereabove. In order to determine the reflection coefficient R, the amplitude of the returned sense pulse is divided by the amplitude of the returned reference pulse to provide a normalised value that will allow reliable discrimination between the presence of ice and the presence of air at the sensing surface 26.

A suitable control circuit for the sensor 10 is shown in schematic form in Figure 5 and designated generally therein by the reference character 50. As shown, the sensor 10 is connected to a multiplexer 52 which functions under the control of a sequencer 54 to connect the sensor 10 to an excitation source 56 or to a return signal amplifier 58. The excitation source 56 is also under the control of the sequencer 54 and functions to provide an electrical excitation pulse to the sensor 10 to provide the acoustic signal as described above. The output of the return signal amplifier 58 is provided to a peak detector 59 which is connected to two sample and-hold circuits 60 and 62, which are also under the control of the sequencer 54. A comparator 64 compares the output of the sample-and-hold circuits 60 and 62, that is, the values corresponding to the respective peak values of the reference pulse and the pulse returned from the sensing surface 26, as described above in connection with Figure 4, and provides a 'no ice' indication when the difference between the outputs of the two sample-and-hold circuits 60 and 62 is above a predetermined value and an 'ice' indication when the difference is below the predetermined value.

In operation, the sequencer 54 controls the multiplexer 52 to connect the excitation source 56 to the sensor 10 and controls the excitation source 56 to drive the sensor 10 to produce the acoustic energy that is transmitted toward the sensing surface 26. Thereafter, the sequencer 54 controls the multiplexer 52 to disconnect the excitation source 56 and connect the sensor 10 to the return signal amplifier 58 with one of the sample-and-hold circuits 60 and 62 operated to sample the magnitude of the first reflected pulse from the reference surface 30 and the second of the sample-and-hold circuits 60 and 62 operated to sample the magnitude of the following reflected pulse returned from the sensing surface 26. While the sequencer 54 can be programmed to gate the sample-and-hold circuits 60 and 62 in a predetermined time relationship, a sense path (as represented in dotted line) can be provided from the output of the return signal amplifier 58 to the sequencer 54 to allow gating to be controlled by the reception of the first reflected pulse. The output of the sample-and-hold circuits 60 and 62 is fed to the threshold comparator 64 which provides a 'no ice' indication when the difference between the outputs of the two sample-and-hold circuits 60 and 62 is above a predetermined value and an 'ice' indication when the difference is below the predetermined value.

Another control system for operating a plurality of transducers 10, for example, a plurality of N transducers 10 positioned at various locations on the wing surfaces of an aircraft, is shown in Figure 6 and designated generally therein by the reference character 100. As shown, plurality of N transducers 10 ... $10_n$ are connected to a 1-of-N multiplexer 102 which is controlled, as explained below, to connect the various transducers 10 ... $10_n$ to another multiplexer 104 which is controlled to connect an excitation source 106 to the selected sensor 10 or to connect the selected sensor 10 to a return signal amplifier 108. A 'peak' value detector 109 is connected to the output of the return signal amplifier 108 and functions to feed an indication of the peak value of the output of the return signal amplifier 108 to an analog-to-digital converter 110 which provides a digital representation of the output of the selected sensor 10 for subsequent signal processing. A microprocessor 112 operates to provide the appropriate select signals to the multiplexers 102 and 104 and the command signal to the excitation source 106 and accepts the digital output of the analog-to-digital converter 110 along bus 114. A memory 116 is connected to the microprocessor 112 through a bus 118 and serves to store values representative of the various reference and sensor surface signals from each of the sensors 10 ... $10_n$. The microprocessor 112 is of conventional organisation and includes I/O and data ports, a read-only memory (ROM) containing a stored control program that implements the sequence described below, a random-access memory (RAM) for storing values assigned to variables; an arithmetic-logic unit (ALU); one or more storage registers Reg. A, Reg. B, Reg. C ...., for manipulating data; and a clock CLK.

The control system 100 operates in response to a stored control program which provides a selected signal to the multiplexer 102 to sequentially select a sensor 10, a select signal to the multiplexer 104 to couple the excitation source 106 to the selected sensor 10, and a command signal to the excitation source 106 to generate the acoustic pulse for transmission to the sensing surface 26. Thereafter, the microprocessor 112 controls the multiplexer 104 to disconnect the excitation source 106 and connect the sensor 10 output to the return signal amplifier 108. The analog-to-digital converter 110 converts the peak value of the return signal from the reference surface 30 (Figure 2) to digital values of appropriate bit-width (e.g., 16 bits) and provides the values to the microprocessor 112 via the bus 114 for storage in the memory 116. Thereafter, the peak value of the following pulse, representative of the energy returned from the sensing surface 26 of the selected sensor 10, is digitised and stored in an appropriate location. The microprocessor 112 then divides the peak value of the one pulse by the peak value of the other to determine a ratio value that is representative of the reflection coefficient R at the sensing surface 26. The microprocessor 112 then sequentially interrogates the remaining sensors 10 until each has provided a respective reflection coefficient R. The ice/no ice output is then provided when a predetermined number of sensors 10, for example, a simple majority, indicate the presence of ice by providing a reflection coefficient R below a threshold value. In addition to providing the transducer excitation signal through the multiplexers 102 and 104, each sensor 10 can be provided with its own excitation source (not specifically shown) in the form of a capacitive or inductive discharge circuit which is triggered or otherwise controlled via the multiplexer 102.

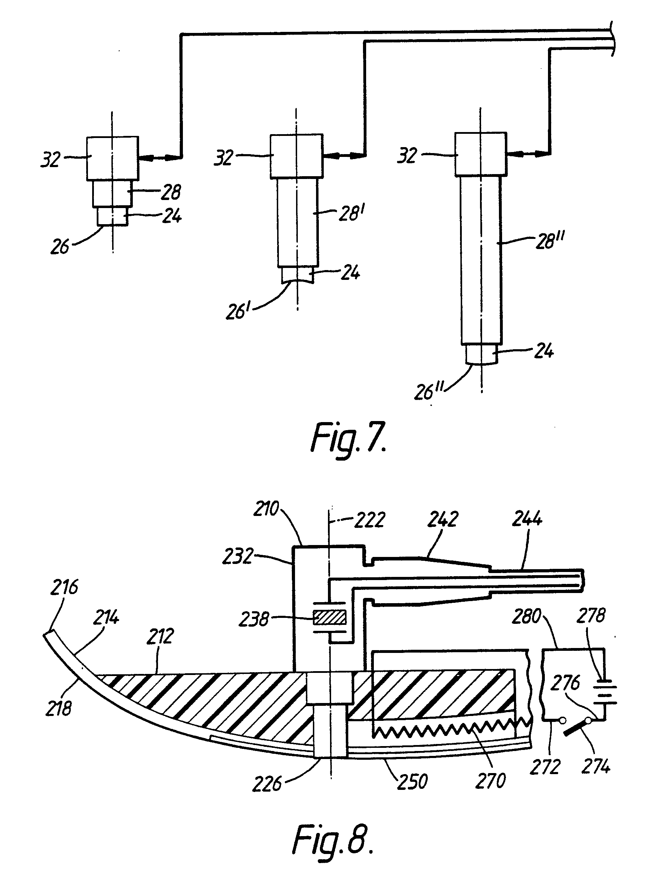

In addition to using a multiplexed or switched operating environment to excite and obtain information from a plurality of sensors 10, a time-multiplexed arrangement can be used. For example and as shown in Figure 7, the intermediate section 28 for the three sensors shown is formed with different respective lengths, as represented by sections 28, 28', and 28", to define sensors having different acoustic delays. The various sensors are excited simultaneously with the return reference surface 30 and sensor surface 26 signals for each sensor occurring in a unique time relationship relative to the other sensors as function of the various acoustic delays.

In the information processing systems of Figures 5 and 6, the peak value of the reference and sensing surfaces pulses is used to effect the determination of the reflection coefficient R. As can be appreciated, other values are suitable including an integrated value representative of the entire returned pulses above a selected amplitude threshold or a time 'windowed' value representative of returned pulses between start and stop times that bracket the occurrence of the peak value.

In the preferred embodiment of the sensor 10 described above and as represented by the sensing surface 26 in Figures 1-3, the sensing surfaces have been presented as a planar surface at the end of a cylinder. As can be appreciated, the sensing surface can be non-circular and can be formed as a non-planar surface, for example, as a concave surface as represented by the sensing surface 26' in Figure 7, or a convex surface as represented by the sensing surface 26", to conform to the local surface configuration of the aerodynamically active airfoil. While the system described is intended for the detection of ice on air foil surfaces of aircraft, it can be used in any other application in which ice detection is required.

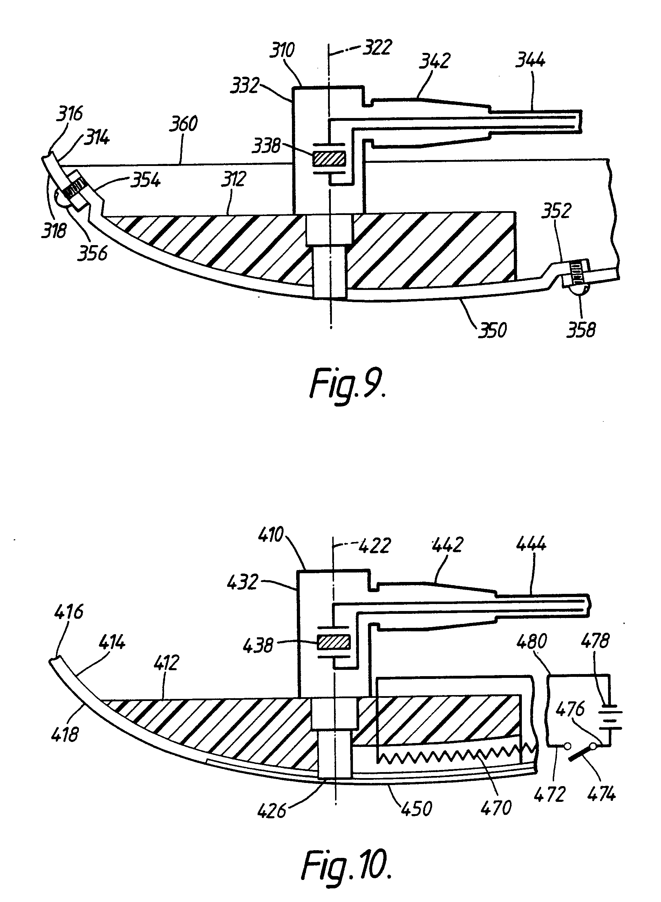

Another of the ice detection sensor systems is shown in an exemplary application in Figure 8 and, as shown, includes a sensor 210 mounted in a support block 212 which is positioned against the interior surface 214 of a wall section 216 which defines, in an aircraft environment, an exposed air foil surface 218, such as the surface of a rotor blade, or the air entry surfaces of an engine nacelle. The support block 212 can be formed in the same general manner as the support block 12 of Figure 1. It is formed about a longitudinal axis 222. A distal section of the sensor body has an end surface at its remote end which functions as a sensing surface 226, an intermediate section which joins with the distal section at an annular shoulder functioning as a reference surface and a rear section 232 which joins with the intermediate section at an annular shoulder. The rear section 232 is formed with a counterbore with a discoidal piezoelectric transducer secured to the bottom wall of the counterbore with a suitable cement. As shown in Figure 8, the sensing surface 226 is positioned in a substantially co-planar relationship with the exposed surface 218 of the wall section 216. While the sensing surface 226 is shown as essentially planar, as explained below, the sensing surface 226 can be non-planar so as to conform to the shape of the immediately adjacent surface.

The piezoelectric transducer 238 is of conventional design and produces an acoustic output pulse in response to an electrical drive signal, and, conversely, produces an electrical output signal when acoustically stimulated. The piezoelectric transducer 238 includes electrodes formed on its opposite faces for connection to appropriate conductors which pass through an opening to a connector 242 and a cable 244. The piezoelectric transducer 238 is connected to and controlled by a controller circuit, of the type described in connection with Figures 5 and 6. A counterbore rearwardly of the piezoelectric transducer 238 is preferably backfilled with an appropriate 'potting' material, such as various types of epoxies and silicones.

Wear-resistant strip 250 is connected to surface 214. Strip 250 is preferably composed of titanium alloy. Sensing surface 226 extends through apertures provided in surface 218 and strip 250.

Resistance heater 270 is connected through electrical conductor line 272, switch 274 and electrical conductor line 276 to electrical power source 278. Electrical conductor line 280 connects power source 278 to heater 270.

When ice forms on surface 218, it is detected by sensor 210. Switch 274 is then closed to convey electrical current to heater 270 from source 278 to de-ice surface 218.

Another one of the ice detection sensor systems is shown in Figure 9 and, as shown, includes a sensor 310 mounted in a support block 312 that is positioned against the interior surface 314 of a wall section 316 (which is preferably made of aluminium) which defines, in an aircraft environment, an exposed air foil surface 318, such as the surface of a wing or the air entry surfaces of an engine nacelle. The support block 312 can be formed in the same general manner as the support block 12 of Figure 1. It is formed about a longitudinal axis 322. A distal section of the body has an end surface at its remote end which functions as a sensing surface 326, an intermediate section which joins with the distal section at an annular shoulder functioning as a reference surface and a rear section 332 which joins with the intermediate section at an annular shoulder. The rear section 332 is formed with a counterbore with a discoidal piezoelectric transducer secured to the bottom wall of the counterbore with a suitable cement. As shown in Figure 9, the sensing surface 326 is positioned in a substantially co-planar relationship with the exposed surface 318 of the wall section 316. While the sensing surface 326 is shown as essentially planar, as explained below, the sensing surface 326 can be non-planar so as to conform to the shape of the immediately adjacent surface.

The piezoelectric transducer 338 is of conventional design and produces an acoustic output pulse in response to an electrical drive signal, and, conversely, produces an electrical output signal when acoustically stimulated. The piezoelectric transducer 338 includes electrodes formed on its opposite faces for connection to appropriate conductors which pass through an opening to a connector 342 and a cable 344. The piezoelectric transducer 338 is connected to and controlled by a controller circuit, of the type described in connection with Figures 5 and 6. A counterbore rearwardly of the piezoelectric transducer 338 is preferably backfilled with an appropriate 'potting' material, such as various types of epoxies and silicones.

Cover plate 350 is mounted and provided with flanges 352 and 354, which are bolted to wall section 316 by bolts 356 and 358. The sensor 310 is readily installed and readily replaced by fastening and unfastening bolts 356 and 358 to wall section 316.

When ice forms on surface 318 it is detected by sensor 310. Warm air is then conveyed through duct 360 to de-ice surface 318.

A further one of the ice detection sensor systems is shown in Figure 10 and, as shown, includes a sensor 410 mounted in a support block 412 which is positioned against the interior surface 414 of a wall section 416 which defines, in an aircraft environment, an exposed air foil surface 418, such as the surface of a rotor blade, wing or the air entry surfaces of an engine nacelle. Again, the support block 412 can be formed in the same general manner as the support block 12 of Figure 1. It is formed about a longitudinal axis 422. A distal section of the sensor body has an end surface at its remote end which functions as a sensing surface 426, an intermediate section which joins with the distal section at an annular shoulder functioning as a reference surface and a rear section 432 which joins with the intermediate section at an annular shoulder. The rear section 432 is formed with a counterbore with a discoidal piezoelectric transducer secured to the bottom wall of the counterbore with a suitable cement. As shown in Figure 10, surface 426 is positioned beneath wear plate 450.

The piezoelectric transducer 438 is of conventional design and produces an acoustic output pulse in response to an electrical drive signal, and, conversely, produces an electrical output signal when acoustically stimulated. The piezoelectric transducer 438 includes electrodes formed on its opposite faces for connection to appropriate conductors which pass through an opening to a connector 442 and a cable 444. The piezoelectric transducer 438 is connected to and controlled by a controller circuit, of the type described in connection with Figures 5 and 6. A counterbore rearwardly of the piezoelectric transducer 438 is preferably backfilled with an appropriate 'potting' material, such as various types of epoxies and silicones.

Resistance heater 470 is connected through electrical conductor line 472, switch 474 and electrical conductor line 476 to electrical power source 478. Electrical conductor line 480 connects power source 478 to heater 470. When ice forms on wear plate 450 it is detected by sensor 410. Switch 474 is then closed to convey electrical current to heater 470 from source 478 to de-ice surface 418.

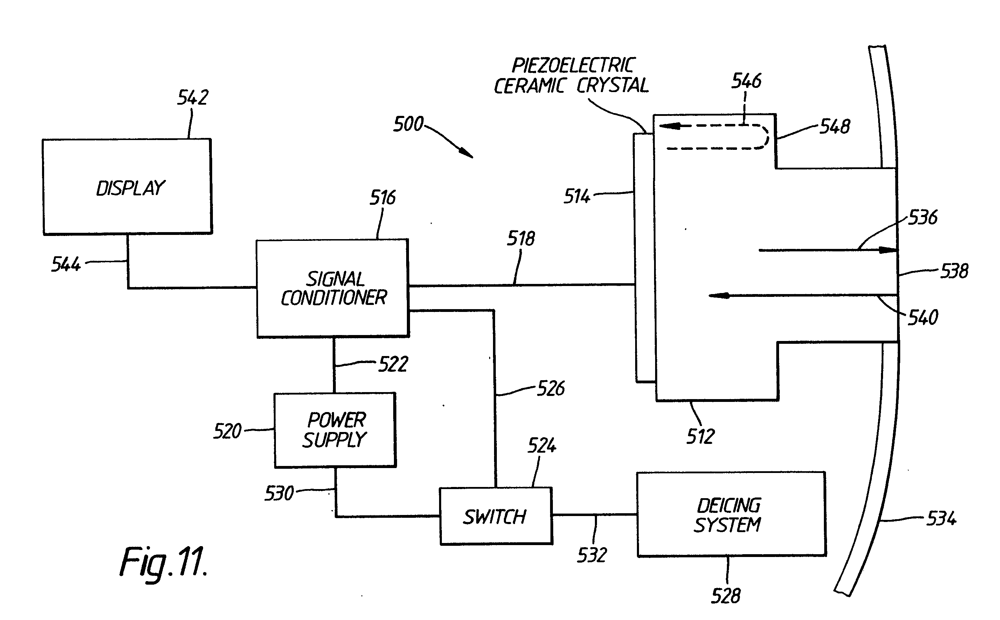

Figure 11 shows a further one of the ice detection and de-icing systems at 510. Sensor housing 512 supports piezoelectric ceramic crystal 514 which is activated by a signal conditioner 516 through line 518. Signal conditioner 516 receives power from power supply 520 through line 522. Signal conditioner 516 controls switch 524 through line 526. De-icing system 528 receives power through lines 530 and 532. De-icing system 528 is positioned adjacent to aircraft surface 534.

Crystal 514 provides ultrasonic pulses 536 which are partially reflected from sensing surface 538. The reflected pulses 540 are detected by crystal 514. Signals representative of the amplitude of the reflected pulses are conducted through line 518 to signal conditioner 516. When signals received by signal conditioner 516 correspond to a preset threshold value for ice detection, presence of ice and/or the corresponding thickness of the ice present are displayed on display 542. Display 542 is connected to signal conditioner 516 through line 544.

A portion of pulse 536 is reflected as reference reflected pulse 546 from shoulder 548 to crystal 514. This signal, corresponding to the reference reflected pulse, is used to normalise the signal from the sensing reflected pulse 540.

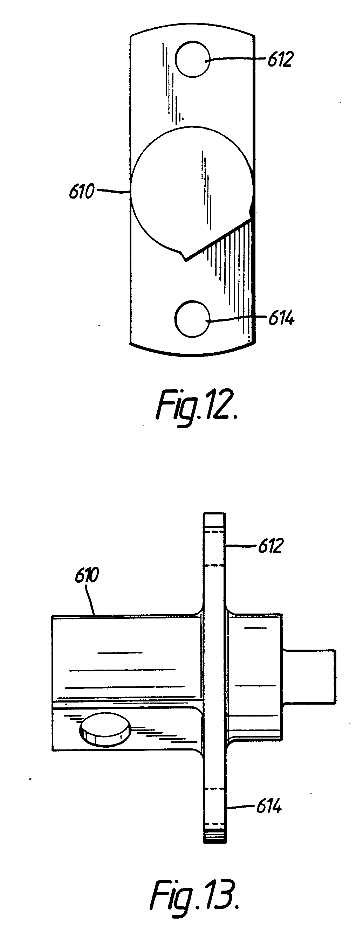

Figures 12 and 13 show bottom and side views respectively of a preferred housing body 510 for enclosing and mounting one of the sensors. The mounting apertures 512 and 514 are each adapted to receive a bolt to connect the housing to a body member of an aircraft.

## Claims

1. Apparatus for detecting ice, comprising a sensing surface (26;226;426;538), a device (38;238;338;438;514) for transmitting ultrasonic pulses to the sensing surface (26;226;426;538), and a device (38;238;338;438;514) for detecting ultrasonic pulses reflected from the sensing surface (26;226;426;538), and characterised by ice presence detecting device (50;100;516) for detecting ice on the sensing surface (26;226;426;538) or immediately adjacent thereto in dependence on the amplitude of the reflected pulse.

2. Apparatus according to claim 1, characterised in that the ice presence detecting device (50;100;516) comprises a device responsive to the amplitude of the reflected pulses for determining the reflection coefficient of the acoustic energy reflected from the sensing surface.

3. Apparatus according to claim 1 or 2, characterised by an ice thickness indicating device (50;100;516) responsive to the amplitude of the reflected pulses for producing an output dependent on the thickness of the ice.

4. Apparatus according to claim 3, characterised by a reference surface (30;548), a device (38;238;338;438;514) for transmitting ultrasonic pulses to the reference surface (30;548) and a device (38;238;338;438;514) for detecting ultrasonic pulses reflected from the reference surface (30;548), and in that the ice thickness indicating device comprises a device (64;112;516) for comparing the amplitude of the reflected pulses from the sensing surface (26;226;426;538) with the amplitude of the reflected pulses from the reference surface (30;548).

5. Apparatus according to any preceding claim, characterised by a device operative to sense the amplitudes of successive pulses reflected from the sensing surface and a device responsive to the rate of change of such amplitudes for providing a signal representative of the rate of ice accumulation.

6. Apparatus according to claim 5, characterised by a device for comparing the amplitude of each of the successive reflected pulses with first and second preset amplitude values, and a device operative to measure the elapsed time between the incident when one of the amplitudes exceeds the first preset value and the instant when another of the amplitudes exceeds the second preset value, whereby the elapsed time is a measure of the rate of ice accumulation.

7. Apparatus according to any preceding claim, characterised by a de-icing device (270;360;470;528) for de-icing the sensing surface (26;226;426;538) or a surface adjacent thereto.

8. Apparatus according to claim 3 or 4 and claim 7, characterised by a device (e.g. 524) for automatically rendering the de-icing device (e.g. 528) operative when the thickness of the ice is detected as exceeding a predetermined value.

9. Apparatus according to any preceding claim, characterised in that the sensing surface (26;226;426;538) is substantially co-planar with the surface of a body member (18;218;318;418;534) exposed to icing.

10. Apparatus according to any one of claims 1 to 8, characterised in that the sensing surface (26;226;426;538) is adjacent to the interior surface of a body member (18;218;318;418;534) whose exterior surface is exposed to icing.

11. Apparatus according to any one of claims 1 to 8, characterised in that the sensing surface (26;226;426;538) is connected to a plate (350) which is exposed to icing and is itself removably connected to a body member (318).

12. Apparatus according to any one of claims 9 to 11, characterised in that the body member (18;218;318;418;534) is an air foil or other surface of an aircraft.

13. Apparatus according to any preceding claim, characterised in that the sensing surface is the end surface (26) of a body (10) whose opposite end (36) is hollow to receive an electro-acoustic transducer (38) for generating the pulses and for receiving and detecting the reflected pulses.

14. Apparatus according to claim 13, characterised in that the transducer is a piezo-electric transducer (38).

15. A method of detecting ice, comprising the steps of transmitting successive ultrasonic pulses to a sensing surface (26;226;426;538) on which or immediately adjacent to which ice may form, and detecting the resultant ultrasonic pulses reflected from the sensing surface (26;226;426;538), and characterised by the step of sensing the amplitude of the reflected pulses whereby to determine the presence of ice on the sensing surface (26;226;426;538) or on the surface immediately adjacent thereto.

16. A method according to claim 15, characterised in that the step of detecting the amplitudes of the reflected pulses comprises the step of detecting a predetermined decrease in the amplitude of the reflected pulses, whereby to indicate the said presence of ice.

17. A method according to claim 15 or 16, characterised by the step of determining the reflection coefficient of the acoustic energy in the reflected pulses.

18. A method according to any one of claims 15 to 17, characterised by the steps of transmitting the ultrasonic pulses to a reference surface (30;548) as well as to the sensing surface (26;226;426;538), detecting the pulses reflected by the reference surface (30;548), and comparing the amplitudes of the pulses reflected by the reference surfaces (30;548) with the amplitudes of the pulses reflected by the sensing surface (26;226;426;538), whereby to produce an output indicating the presence of ice.

19. A method according to claim 18, characterised in that the said output is dependent on the thickness of the ice.

20. A method according to any one of claims 15 to 19, characterised by the step of positioning the sensing surface (26;226;426;538) co-planarly with or immediately adjacent to the surface of a body member (18;218;318;418;534) exposed to icing.

21. A method according to claim 20, characterised by the step of responding to the detection of ice on or adjacent to the sensing surface (26;226;426;538) by instituting de-icing.

Fig.1.

Fig. 2.

Fig.3.

AMP

TIME

T=0     $T_r$     $T_s$

Fig.4.

50

54 SEQUENCER

52 MULTIPLEXER

56 EXCITE SOURCE

60 SAMPLE & HOLD

10 SENSOR

58 SIG AMP

59 PEAK DETECTION

62 SAMPLE & HOLD

64 COMPARATOR

ICE/NO ICE

Fig.5.

Fig. 6.

EP 0 393 960 A1

32 — 28 — 24 — 26

32 — 28' — 24 — 26'

32 — 28'' — 24 — 26''

Fig. 7.

210 — 222 — 242 — 244
232
238
216 — 214 — 212 — 280 — 278
218 — 276
226 — 250 — 270 — 272 — 274

Fig. 8.

Fig.9.

Fig.10.

Fig.11.

PIEZOELECTRIC
CERAMIC CRYSTAL

DISPLAY — 542

SIGNAL CONDITIONER — 516

POWER SUPPLY — 520

SWITCH — 524

DEICING SYSTEM — 528

EP 0 393 960 A1

*Fig.12.*

*Fig.13.*

**EUROPEAN SEARCH REPORT**

Application Number

EP 90 30 4049

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | US-A-4571693 (BIRCHAK ET AL)<br>* column 2, lines 28 - 55 *<br>* column 3, lines 7 - 15 *<br>* column 4, lines 5 - 16 *<br>* column 6, line 45 - column 7, line 31 *<br>* figures * | 1-4,<br>13-19 | B64D15/20<br>G01H15/00 |
| Y | | 7, 8,<br>10-12,<br>21 | |
| X | JOURNAL OF AIRCRAFT.<br>vol. 22, no. 06, June 1985, NEW YORK US<br>pages 530 - 535; R.J. HANSMAN ET AL:<br>"MEASUREMENT OF ICE ACCRETION USING ULTRASONIC<br>PULSE-ECHO TECHNIQUES"<br>* page 530, left-hand column, paragraph 1 *<br>* page 531, left-hand column; figures 1, 2, 9 * | 1-3, 9,<br>15-17,<br>20 | |
| Y | EP-A-76065 (THE SECRETARY OF DEFENCE IN HER<br>BRITANNIC MAJESTY'S GOVERNMENT OF U.K.)<br>* the whole document * | 7, 8,<br>12, 21 | TECHNICAL FIELDS SEARCHED (Int. Cl.5 ) |
| Y | FR-A-1482385 (GLASS DEVELOPMENTS LTD)<br>* page 1, right-hand column, paragraph 7 *<br>* page 2, lines 10 - 11 *<br>* page 2, right-hand column, last paragraph -<br>page 3, left-hand column, paragraph 2 *<br>* page 4, left-hand column, paragraphs 4 - 6 *<br>* figures * | 8, 10,<br>11, 21 | B64D<br>G01H |
| A | | 5, 6 | |
| A | EP-A-100621 (U.K. ATOMIC ENERGY AUTHORITY)<br>* page 4, lines 4 - 28 * | 1, 15 | |
| X,P | EP-A-321146 (SIMMONDS PRECISION PRODUCTS LTD.)<br>* column 9, lines 41 - 50; figures * | 1-6, 9,<br>12-20 | |

The present search report has been drawn up for all claims

| Place of search | Date of completion of the search | Examiner |
|---|---|---|
| THE HAGUE | 24 JULY 1990 | ESTRELA Y CALPE J. |

EPO FORM 1503 03.82 (P0401)